**Europäisches Patentamt**

**European Patent Office**

**Office européen des brevets**

(19)

(11) Publication number: **0 172 657**
**B1**

(12)

# EUROPEAN PATENT SPECIFICATION

(45) Date of publication of the patent specification:
**18.10.89**

(51) Int. Cl.⁴: **G06K 11/06**

(21) Application number: **85305159.7**

(22) Date of filing: **19.07.85**

(54) Coordinate reading device.

(30) Priority: **23.07.84 JP 152559/84**

(43) Date of publication of application:
**26.02.86 Bulletin 86/9**

(45) Publication of the grant of the patent:
**18.10.89 Bulletin 89/42**

(84) Designated Contracting States:
**DE FR GB**

(56) References cited:
PATENTS ABSTRACTS OF JAPAN, vol. 6,
no. 129 (P-128)[1007], 15th July 1982; & JP - A
- 57 55 444 (ZENERARU K.K.) 02-04-1982
IBM TECHNICAL DISCLOSURE BULLETIN, vol. 23,
no. 7B, December 1980, page 3286, New York, US; L.S.
CHILDRESS et al.: "Selector pen proximity switch
function"
PATENTS ABSTRACTS OF JAPAN, vol. 4,
no. 53 (P-33)[635], 25th October 1980, page P 33; & JP -
A - 55 99 683 (DAINI SEIKOSHA K.K.) 29-07-1980

(73) Proprietor: **SEIKO INSTRUMENTS INC., 31-1,
Kameido 6-chome Koto-ku, Tokyo 136(JP)**

(72) Inventor: **Saeki, Shinji, c/o Seiko Instruments &
Electronics Ltd., 6-31-1, Kameido Koto-ku Tokyo(JP)**

(74) Representative: **Caro, William Egerton et al, J. MILLER &
CO. Lincoln House 296-302 High Holborn, London
WC1V 7JH(GB)**

## Description

This invention relates to co-ordinate reading devices for use, for example, as input devices such as computers.

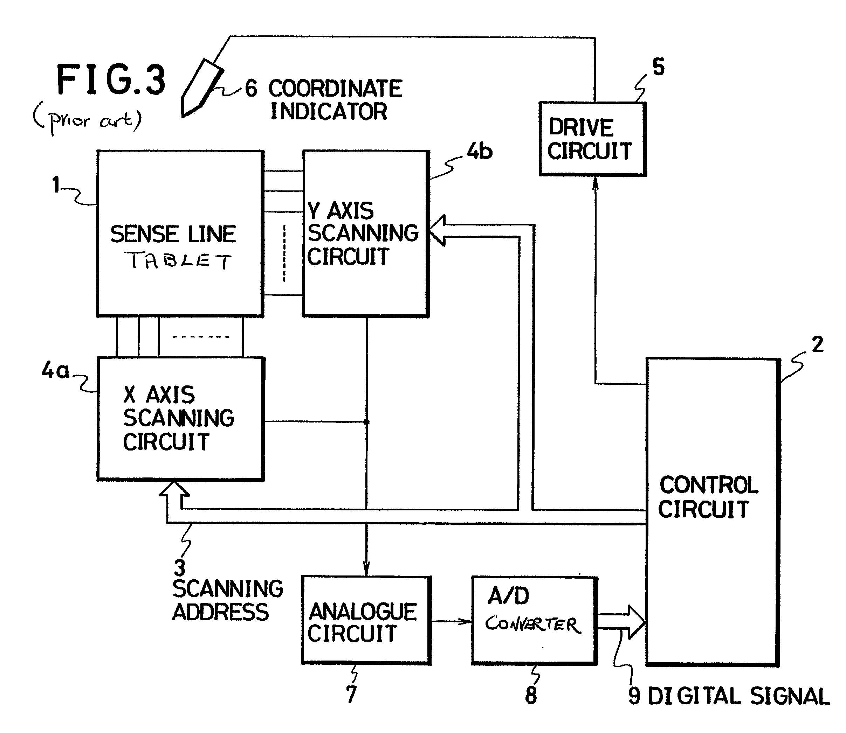

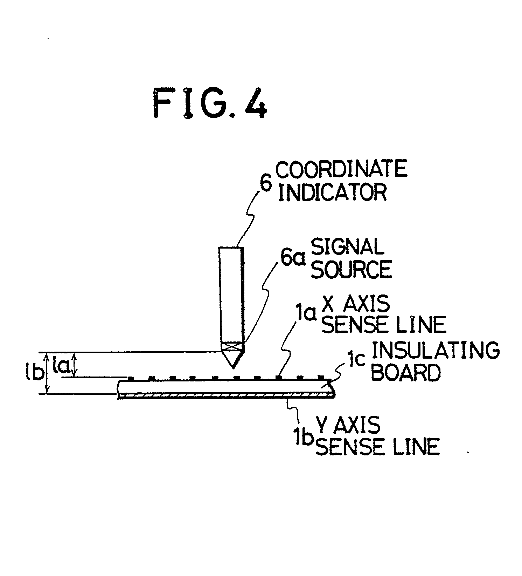

Figures 3 and 4 show an example of a known coordinate reading device. A sense line matrix tablet 1 includes a printed baseboard comprising a group of sense lines la (Figure 4) in the X-axis direction, and a group of sense lines 1b in the Y-axis direction mounted on opposite faces of an electrically insulating board 1c. A co-ordinate indicator 6, having a signal source 6a, is driven by a drive circuit 5 (Figure 3) to generate a signal. The co-ordinate indicator 6 is brought into proximity with a crossing point of two sense lines 1a and 1b. The sense lines on the sense line matrix tablet 1 are scanned successively through X-axis and Y-axis scanning circuits 4a and 4b in response to scanning addresses 3 sent from a control circuit 2. The signal generated by the co-ordinate indicator 6 is detected by the sense lines in the vicinity of the crossing point and signals are induced in those sense lines. The signal induced in each scanned sense line in turn is passed to an analog circuit 7 for amplification and waveform shaping, converted by an analog-to-digital converter 8 into a digital signal 9 and passed into the control circuit 2. It will be appreciated that, in the control circuit 2, the maximum digital signal 9 from each group of sense lines may be detected and related to particular scanning addresses, so that the position of the co-ordinate indicator is known. An example of this type of known co-ordinate reading device is disclosed in JP-A 5 599 683.

In the known co-ordinate reading device, the level of signals detected and induced in the X-axis sense line la at the crossing point below the indicator and in the Y-axis sense line 1b at the crossing point differ because of the difference between the distances $\ell a$ and $\ell b$ of the sense lines 1a and 1b, respectively, from the signal source 6a of the co-ordinate indicator 6. It is known that the levels of these induced signals is in inverse ratio to the squares of the distance $\ell a$ and $\ell b$.

Therefore, when the X-axis sense lines la (Figure 4) are mounted on the side of the insulating board 1c closer to the signal source 6a, the induced signals are much greater than the signals induced in the Y-axis sense lines 1b on the opposite side of the board 1c further from the signal source 6a. If the analog circuit 7 and analog-to-digital converter 8 are selected so as to be appropriate to the level of induced signal from the Xaxis sense lines la, the attenuation of the signal from the source 6a is such that the level of the induced signals from the Y-axis sense lines 1b is small and insufficient, so that the analysis ability to detect the Y-axis sense line will be poor.

If, on the other hand, the input level of the signal induced in the Y-axis sense lines la is sufficient for the converter 8, the level of the induced signal in the X-axis sense lines la will be too great for the converter 8.

In the known co-ordinate reading device to obtain analysis ability sufficient for both the X-axis sense lines and the Y-axis sense lines, a very thin insulating board 1c (thickness t = 0.4–0.5 mm) must be used to reduce the difference ($\ell b - \ell a$) between the distances from the signal source 6a to the respective sense lines 1b, 1a. Consequently, the known co-ordinate reading device must be treated with much care and manufacturing yield is low.

To reduce the difference in level of the detecting signals detected by the respective sense lines 1a, 1b, the distance between the signal source 6a and the X-axis sense line 1a can be increased. The ratio K of the levels of the detected signals, when t = $\ell b - \ell a$, is given by:

$$ K = \frac{\ell a^2}{\ell b^2} = \frac{\ell a^2}{(\ell a + t)^2} $$

and it will readily be appreciated that when $\ell a$ is large compared to t, the value of K in the above formula tends to unity. However, an increase in the distance between the signal source 6a and the sense lines la and 1b will cause a fall in the signal-to-noise (S/N) ratio, and naturally will cause a fall in the analysis ability. To maintain the analysis ability, the signal generated from the signal source 6a must be increased, and the analog circuit 7 and the A/D converter 8 shown in Figure 3 must be made precisely to operate with great accuracy. This has the disadvantage that the conventional coordinate reading device is of large size and is very expensive to manufacture.

The present invention seeks to provide a coordinate reading device which has sufficient analysis ability in both X- and Y-axis, even when an insulating board on opposite sides of which sense lines are provided, has a thickness of 1.6 mm.

JP-A 5 755 444 discloses a scanning line matrix tablet having a group of X-axis scanning lines and a group of Y-axis scanning lines. Scanning signals are applied to them from respective de-coders and the scanning signals are detected by a detection pen. Character sheets are located on the tablet and the supply voltage to the de-coders is automatically decreased as the number of character sheets counted increases.

IBM Technical Disclosure Bulletin, Vol. 23, No.7B, page 3286, December 1980, discloses a transparent tablet having a co-ordinate generating grid within. A pen-like stylus outputs an AC signal which is detected by the grid and is compared with a previously calibrated level so as to generate a proximity signal when the stylus is a predetermined distance from the surface of the tablet. Thus, the calibration is concerned with the distance from the tip of the stylus to the tablet and not the distance between the X-axis and Y-axis lines.

According to the present invention, a co-ordinate reading device comprising a co-ordinate indicator, a drive circuit for driving the co-ordinate indicator, two groups of sense lines for detecting a signal generated by the co-ordinate indicator, the groups being separated from each other by an insulating board, a scanning circuit for scanning the sense lines successively, an analog circuit for amplifying and shaping the waveform of a signal detected by a scanned sense line, an analog-to-digital converter for converting an analog signal from the analog circuit into a digital signal, and a control circuit for sending scanning addresses to the scanning circuit and for determining the position of the co-ordinate indicator from the digital signals, is characterised in that the analog circuit includes amplifier means and switch means for varying the amplification factor of the amplifier means in dependence upon a scanning address received from the control circuit, whereby the amplification factor is increased when the scanning address indicates a sense line which lies on the side of the insulating board further from the positioned co-ordinate indicator.

In the preferred embodiment the switch means is an analog switch. The analog circuit may include resistance elements that are, in operation, switched into and out of a circuit including the amplifier means to vary the amplification factor of the amplifier means.

In a co-ordinate reading device according to the present invention, because the amplification factor of the amplifier means is determined by a scanning address input to the amplifier means, different levels of signals detected by the sense lines have the same signal level when input into the A/D converter. Thus, it is possible to obtain substantially constant analysis ability in both X- and Y-axes.

The invention is illustrated, merely by way of example, in the accompanying drawings, in which.

Figure 1 is a block diagram of one embodiment of a co-ordinate reading device according to the present invention;

Figure 2 is a circuit diagram of an amplifier of an analog circuit of the co-ordinate reading device of Figure 1;

Figure 3 is a block diagram of a known co-ordinate reading device, and

Figure 4 is a sectional view showing the relationship between a sense line and a co-ordinate indicator of the co-ordinate reading device of Figure 3.

Throughout the drawings like parts have been designated by the same reference numerals.

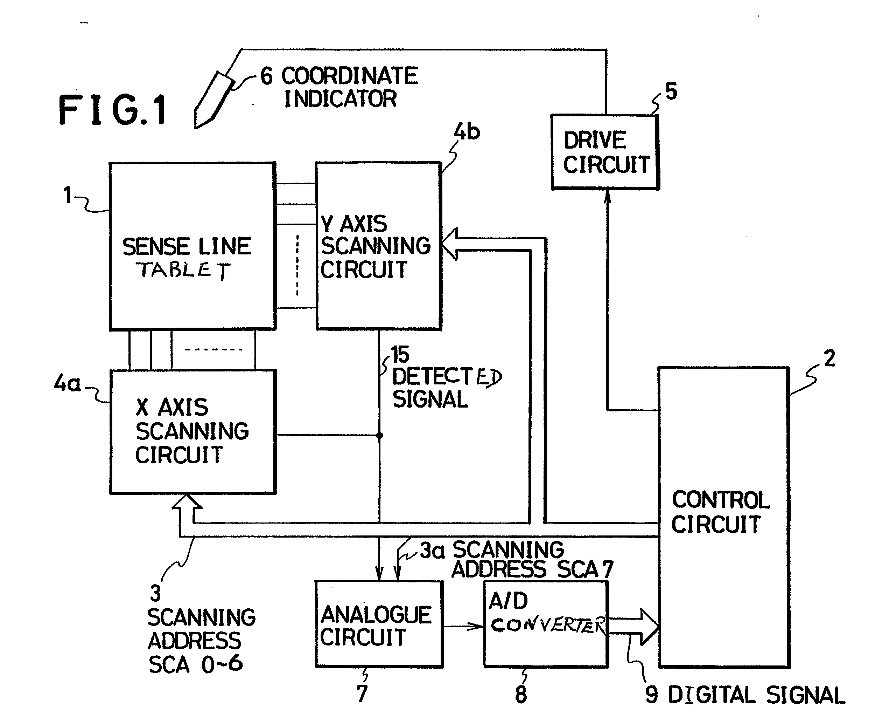

Referring to Figure 1, a sense line matrix tablet 1 of one embodiment of co-ordinate reading device according to the present invention, includes a printed baseboard comprising a group of X-axis sense lines la (Figure 4) and a group of Y-axis sense lines 1b mounted on opposite sides of an electrically insulating board 1c. A co-ordinate indicator 6, having a signal source 6a, is driven by a drive circuit (Figure 1) to generate a signal. The co-ordinate indicator 6 is brought into proximity with a crossing point of two sense lines la and 1b, the sense lines on the sense line matrix tablet 1 are scanned successively through X-axis and Y-axis scanning circuits 4a and 4b in response to scanning addresses 3 sent from a control circuit 2. For example, when there are 128 X-axis sense lines and 128 Y-axis sense lines, the scanning address 3 needs seven lines (SCA 0–6) to scan each line of each axis. In addition, one line (SCA 7) is needed as a scanning address 3a to select either the X-axis lines or the Y-axis lines. Thus a total of eight lines is necessary.

The scanned sense line detects the signal generated from a co-ordinate indicator 6 driven by the drive circuit 5, and the output 15 from the scanned sense line is input to an analog circuit 7 through the scanning circuit 4a or 4b. The output signal 15 detected by the sense line is amplified and its waveform is shaped by the analog circuit 7 and sent to an analogto-digital converter 8f for conversion into a digital signal 9. The control circuit 2 scans successively the sense lines la by the scanning address 3 (SCA 0–6), and compares the value converted into the digital signal 9, to identify the scanning address for the maximum value, which thus determines the co-ordinate value of the Xaxis position of the indicator 6.

The scanning address 3a (SCA 7) is then changed and the control circuit 2 scans successively the sense lines 1b by the scanning address 3 (SCA 0–6). By comparing the value converted into the digital signal 9, the scanning address for the maximum value is determined and thus the co-ordinate value of the Y-axis position of the co-ordinate indicator 6. Besides controlling which of the scanning circuits 4a and 4b is to operate, the scanning address 3a is supplied to the analog circuit 7.

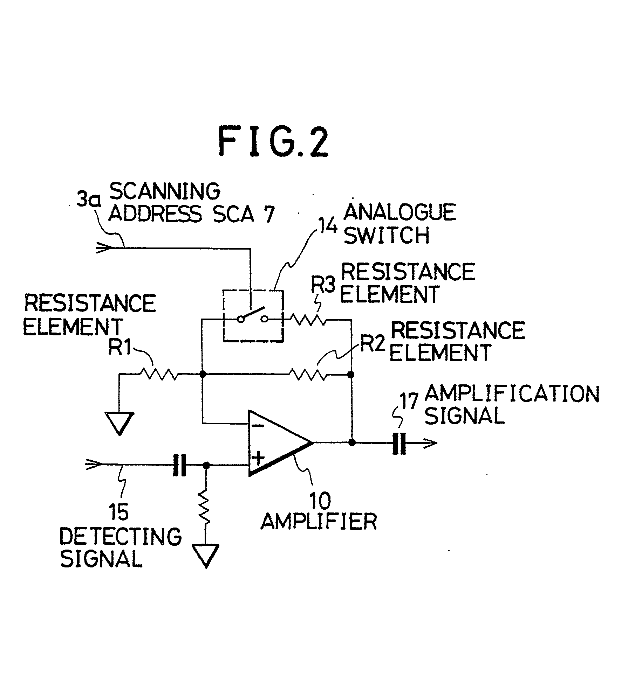

Figure 2 shows an embodiment of an amplification portion of the analog circuit 7. This amplification portion is an ordinary non-inversion amplifier, and comprises an operational amplifier 10, resistance elements R1, R2, R3 which determine the amplification rate of the amplifier and an analog switch 14 which is turned ON/OFF by the scanning address 3a to switch the resistance element R3 into and out of the circuit of the amplifier 10 to vary the amplification factor thereof. The amplification factor A ON when the analog switch is ON, and the amplification factor A OFF when the analog switch 14 is OFF, are given by:

$$A \ ON = \cfrac{R1 + \cfrac{R2 \cdot R3}{R2 + R3}}{R1} \qquad A \ OFF = \cfrac{R1 + R2}{R1}$$

Generally, the distance $\ell a$ in Figure 4 is about 5 mm. In the conventional co-ordinate reading device the printed baseboard carrying the sense line is 0.4 mm in thickness which is very thin for a baseboard. When a board of a regular thickness of about 1.6 mm is used, the ratio K referred to above of the levels of detecting signals detected by the X- and Y axis sense lines 1a, 1b will be:

$$K = \frac{5^2}{(5 + 1.6)^2} = 0.57$$

Therefore, in Figure 2, if the constants of the resistance elements R1, R2, R3 are selected to be A ON/ A OFF = 0.57, and if the logic is matched so that the analog switch 14 is ON when the scanning address 3a (SCA 7) is scanning the X-axis and the analog switch is OFF when scanning the Y-axis, an output signal 17 of the amplifier of Figure 2 can decrease the difference of the level of the detecting signals 15 detected from the Xand Y-axis sense lines, and this output signal 17 can give a definite substantially constant level of signal to the A/D converter shown in Figure 1.

In this embodiment, as the thickness of the printed baseboard is 1.6 mm compared to 0.4 mm for the conventional co-ordinate reading device, the distance $\ell$ b in Figure 4 is increased from 5.4 mm to 6.6 mm, and the level of the signal detected by the Y-axis sense line 1b is $5.4^2/6.6^2 = 0.67$, a 30% decrease but this can show sufficient analysis ability with the analog circuit of the present invention compared to that of the conventional co-ordinate reading device.

The amplifier shown in Figure 2 uses the scanning address 3a and controls the amplification factor of the amplifier 10. However, it will be appreciated that there are many alternative ways of achieving the same end other than the one shown in Figure 2.

As stated above, by inputting the scanning address to the analog circuit, and by adding a simple circuit comprising one analog switch, without destroying the analysis ability of the conventional co-ordinate reading device, it is possible to use a baseboard for the sense lines of regular thickness, e.g. 1.6 mm which has the effect of improving manufacturing yield and reducing cost. The increased thickness of the baseboard compared to that of the conventional co-ordinate reading device means that there is no need to strengthen the sense lines and the resulting co-ordinate reading device is vibration-proof and robust.

## Claims

1. A co-ordinate reading device comprising a coordinate indicator (6), a drive circuit (5) for driving the co-ordinate indicator, two groups of sense lines (1a, 1b) for detecting a signal generated by the coordinate indicator, the groups being separated from each other by an insulating board (1c), a scanning circuit (4a, 4b) for scanning the sense lines successively, an analog circuit (7) for amplifying and shaping the waveform of a signal detected by a scanned sense line, an analog-to-digital converter for converting an analog signal from the analog circuit into a digital signal (9), and a control circuit (2) for sending scanning addresses to the scanning circuit and for determining the position of the co-ordinate indicator from the digital signals, characterised in that the analog circuit (7) includes amplifier means (10) and switch means (14) for varying the amplification factor of the amplifier means (10) in dependence upon a scanning address (3a) received from the control circuit (2), whereby the amplification factor is increased when the scanning address (3a) indicates a sense line (1b, which lies on the side of the insulating board (1c) further from the positioned co-ordinate indicator (6).

2. A device as claimed in claim 1, characterised in that the switching means (14) is an analog switch.

3. A device as claimed in claim 2, characterised in that the analog circuit (7) includes resistance means (R3) which, in operation, are switched into and out of a circuit including the amplifier means (10) to vary the amplification factor of the amplifier means.

**Patentansprüche**

1. Koordinatenablesungsvorrichtung mit einem Koordinatenindikator (6), einer Treiberschaltung (5) zur Ansteuerung des Koordinatenindikators, zwei Gruppen von Fühlerleitungen (1a, 1b) zur Detektierung eines durch den Koordinatenindikator erzeugten Signals, welche durch eine Isolatorplatte (1c) voneinander getrennt sind, einer Abtastschaltung (4a, 4b) zur sukzessiven Abtastung der Fühlerleitungen, einer Analogschaltung (7) zur Verstärkung und Formung der Signalform eines durch eine abgetastete Abfühlleitung detektierten Signals, einem Analog-Digital-Umsetzer zur Umsetzung eines Analogsignals von der Analogschaltung in ein Digitalsignal (9) und mit einer Steuerschaltung (2) zur Einspeisung von Abtastadressen in die Abtastschaltung sowie zur Festlegung der Stelle des Koordinatenindikators aus den Digitalsignalen, dadurch gekennzeichnet, daß die Analogschaltung (7) eine Verstärkeranordnung (10) und eine Schalteranordnung (14) zur Änderung des Verstärkungsfaktors der Verstärkerschaltung (10) in Abhängigkeit von einer von der Steuerschaltung (2) aufgenommenen Abtastadresse (3a) enthält, wodurch der Verstärkungsfaktor erhöht wird, wenn die Abtastadresse (3a) eine Abfühlleitung (1b) anzeigt, welche auf einer Seite der Isolatorplatte (1c) weiter vom eingestellten Koordinatenindikator (6) entfernt liegt.

2. Vorrichtung nach Anspruch 1, dadurch gekennzeichnet, daß die Schalteranordnung (14) ein Analogschalter ist.

3. Vorrichtung nach Anspruch 2, dadurch gekennzeichnet, daß die Analogschaltung (7) einen Widerstand (R3) enthält, welcher im Betrieb zur Änderung des Verstärkungsfaktors der Verstärkeranordnung in eine die Verstärkeranordnung (10) enthaltende Schaltung eingeschaltet und aus dieser herausgeschaltet wird.

**Revendications**

1. Dispositif pour la lecture de coordonnées, comprenant un indicateur de coordonnées (6), un circuit d'attaque (5) pour commander l'indicateur de coordonnées, deux groupes de lignes de détection (1a, 1b) en vue de détecter un signal engendré par l'indicateur de coordonnées, lesdits groupes étant séparés l'un de l'autre par une plaque isolante (1c), un circuit de balayage ou d'exploration pour explorer successivement les lignes de détection, un circuit analogique (7) pour amplifier et pour conformer l'allure de l'onde d'un signal détecté par une ligne de détection explorée, un convertisseur analogique/numérique pour convertir un signal analogique du circuit analogique en un signal numérique (9) et un circuit de commande (2) pour envoyer des adresses de balayage ou d'exploration au circuit de balayage ou d'exploration et pour déterminer la position de l'indicateur de coordonnées à partir des signaux numériques, caractérisé par le fait que le circuit analogique (7) comprend des moyens amplificateurs (10) et des moyens de commutation (14) pour faire varier le facteur d'amplification des moyens amplificateurs (10) en fonction d'une adresse de balayage ou d'exploration (3a) reçue du circuit de commande, la réalisation étant telle que le facteur d'amplification est augmenté lorsque l'adresse de balayage ou d'exploration (3a) indique une ligne de détection (1b) qui est située sur le côté de la plaque isolante (1c) éloigné de l'indicateur de coordonnées positionné (6).

2. Dispositif selon la revendication 1, caractérisé par le fait que les moyens de commutations (14) sont constitués par un commutateur analogique.

3. Dispositif selon la revendication 2, caractérisé par le fait que le circuit analogique (7) comporte des moyens formant résistance (R3) qui, en fonctionnement, sont reliés à ou isolés d'un circuit comprenant les moyens amplificateurs (10) en vue de faire varier le facteur d'amplification desdits moyens amplificateurs.

**FIG.1**

6 COORDINATE INDICATOR

5 DRIVE CIRCUIT

4b Y AXIS SCANNING CIRCUIT

1 SENSE LINE TABLET

4a X AXIS SCANNING CIRCUIT

15 DETECTED SIGNAL

2 CONTROL CIRCUIT

3 SCANNING ADDRESS SCA 0~6

3a SCANNING ADDRESS SCA 7

7 ANALOGUE CIRCUIT

8 A/D CONVERTER

9 DIGITAL SIGNAL

EP 0 172 657 B1

# F I G.2

SCANNING
3a ADDRESS SCA 7

ANALOGUE
14 SWITCH

RESISTANCE
R3 ELEMENT

RESISTANCE
ELEMENT
R1

RESISTANCE
R2 ELEMENT

17 AMPLIFICATION
SIGNAL

15
DETECTING
SIGNAL

10
AMPLIFIER

# FIG.3

(prior art)

**6 COORDINATE INDICATOR**

**1 SENSE LINE TABLET**

**4b Y AXIS SCANNING CIRCUIT**

**5 DRIVE CIRCUIT**

**4a X AXIS SCANNING CIRCUIT**

**2 CONTROL CIRCUIT**

**3 SCANNING ADDRESS**

**7 ANALOGUE CIRCUIT**

**8 A/D CONVERTER**

**9 DIGITAL SIGNAL**

EP 0 172 657 B1

# FIG.4

6 COORDINATE INDICATOR

6a SIGNAL SOURCE

1a X AXIS SENSE LINE

1c INSULATING BOARD

1b Y AXIS SENSE LINE